# EUROPÄISCHE PATENTANMELDUNG

(11) **EP 1 128 317 A2**
(43) Veröffentlichungstag der Anmeldung: **29.08.2001**
(21) Anmeldenummer: 01103774.4
(22) Anmeldetag: 15.02.2001
(51) Int. Cl.: G06K 11/08, G06F 3/00

(54) **Verfahren und Anordnung zur Interaktion mit einer in einem Schaufenster sichtbaren Darstellung**

(30) Priorität: 21.02.2000 DE 10007891
(71) Anmelder: SIEMENS AKTIENGESELLSCHAFT, 80333 München (DE)
(72) Erfinder: Maggioni, Christoph, 10961 Berlin (DE)

(57) **Zusammenfassung**

Es wird eine Anordnung zur Interaktion mit einer in einem Schaufenster sichtbaren Darstellung angegeben, bei der eine Aufnahmeeinheit vorgesehen ist, die ein Zeigeobjekt in der Nähe des Schaufensters aufnimmt. Ferner ist eine Rechnereinheit vorgesehen, anhand derer eine Position des Zeigeobjekts innerhalb der Darstellung bestimmt wird.

## Beschreibung

Die Erfindung betrifft ein Verfahren und eine Anordnung zur Interaktion mit einer in einem Schaufenster sichtbaren Darstellung.

Bei einem handelsüblichen Touchscreen verfährt ein Benutzer mit dem Finger auf einer Fläche und bewegt damit einen Mauszeiger auf einem Bildschirm. Befindet sich der Mauszeiger auf der gewünschten Position kann durch kurzes Tippen auf den Touchscreen die mit der Position verbundene Aktion ausgelöst werden.

Ferner ist aus [1] oder [2] eine Anordnung zur Interaktion, ein sogenannter Virtual Touchscreen, bekannt. Mit der Aufnahme einer Interaktionskomponente, z.B. einer Hand oder einem Zeigestab, zusammen mit einer Interaktionsfläche auf die vorzugsweise eine graphische Bedienoberfläche projiziert wird, ist es möglich, direkt auf der graphischen Bedienoberfläche zu interagieren, die oben beschriebene Aufteilung zwischen Darstellung der Bedienoberfläche und Touchscreen entfällt.

Schaufenster weisen den Vorteil auf, dass sie für die Kunden insbesondere auch jenseits der üblichen Öffnungszeiten Informationen über verkäufliche Waren oder Dienstleistungen anpreisen. Das Schaufenster selbst eröffnet aber den Kunden keine Möglichkeit zur Interaktion, vielmehr erschöpft sich die Wirkung bekannter Schaufenster in der bloßen Betrachtung der hinter dem Schaufenster ausgestellten Waren und/oder Dienstleistungen.

Die **Aufgabe** der Erfindung besteht darin, eine Anordnung zur Interaktion mit einer in einem Schaufenster sichtbaren Darstellung anzugeben.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird eine Anordnung zur Interaktion mit einer in einem Schaufenster sichtbaren Darstellung angegeben, bei der eine Aufnahmeeinheit vorgesehen ist, die ein Zeigeobjekt in der Nähe des Schaufensters aufnimmt.
Ferner ist eine Rechnereinheit vorgesehen, anhand derer eine Position des Zeigeobjekts innerhalb der Darstellung bestimmt wird.

Dabei wird bevorzugt die Position des Zeigeobjekts, das auf einen Ausschnitt innerhalb der in dem Schaufenster sichtbaren Darstellung zeigt, bestimmt. Dieser Ausschnitt ist insbesondere mit einer vorgegebenen Aktion verknüpft, d.h. diese Aktion kann von dem Benutzer anhand der Fläche ausgelöst werden. Eine Möglichkeit der Auslösung besteht darin, dass der Benutzer mit dem Zeigeobjekt für eine vorgegebene Zeitdauer über der Fläche verweilt, eine andere Möglichkeit ist es, dass bei Unterschreiten eines vorgegebenen Abstands zwischen Zeigeobjekt und Schaufenster die Aktion ausgelöst wird. Der Benutzer kann somit durch Verfahren des Zeigeobjekts innerhalb der sichtbaren Darstellung eine Eingabeeinheit, vergleichbar einer Computermaus, bewegen. Die Auslösung der Aktion - dies entspricht einem "Klick" bzw. "Doppelklick" mit der Computermaus - geschieht auf die oben beschriebene Art und Weise.

Somit ist es dem Kunden möglich, sich an dem Schaufenster interaktiv zu informieren oder sogar bestimmte Angebote durch Interaktion an bzw. mit dem Schaufenster wahrzunehmen. Beispiele für solche Interaktionen sind:
- Zusammenstellung eines individuellen Kraftfahrzeuges anhand eines virtuellen Katalogs im Schaufenster eines Kraftfahrzeugverkäufers;
- Information bezüglich Touristikangeboten im Schaufenster eines Reiseunternehmers;
- sonstige Information bzw. Angebotserstellung für individuelle Bedürfnisse;
- Kauf, Buchung oder Vorauswahl einer bestimmten Leistung.

Ein großer Vorteil der Erfindung besteht darin, dass die Interaktion mit dem Schaufenster für den Ladeninhaber bzw. Betreiber des Schaufensters weitgehend wartungsfrei ist, da der Kunde durch die berührungslose Interaktion keinen mechanischen Verschleiß verursacht. Ferner ist das beschriebene Szenario äußerst unempfindlich gegenüber möglichen Beschädigungen, z.B. durch Vandalismus. Schließlich sind für den Benutzer eine einfache Bedienung und damit eine hohe Benutzerfreundlichkeit gewährleistet.

Eine Weiterbildung besteht darin, dass zumindest ein Teil der Darstellung mit dem Schaufenster statisch verbunden, insbesondere auf dieses aufgedruckt ist. Dies eignet sich besonders für fest Bedienschemata, die eine Mehrzahl von Flächen aufweisen, die eine vorbestimmte Funktionalität haben. Ein sich zusätzlich wechselnder Inhalt kann dennoch vorgesehen sein derart, dass ein Informationsteil der Darstellung mit immer neuen (nicht statischen) Inhalten versorgt wird. Ein Beispiel für statisch mit jeweils einer Fläche verbundenen Funktionalitäten sind Navigationsschalter für "vorwärts", "rückwärts", "Anfang", "Ende".

Eine andere Weiterbildung ist es, dass die Darstellung, insbesondere ein Teil der Darstellung, mittels eines Bildschirms, insbesondere eines Flachbildschirms erzeugt wird. Hierfür kann beispielsweise der Flachbildschirm hinter dem Schaufenster angeordnet sein und den Benutzer mit wechselnden Darstellungen vorsorgen.

Hierbei sei angemerkt, dass die Bezeichnung "hinter" dem Schaufenster das bezeichnet, was vom Kunden durch das Schaufenster getrennt ist; demgemäß bezeichnet "vor" dem Schaufenster den Raum, den der Kunde, insbesondere zur Interaktion, benutzt.

Eine Ausgestaltung besteht darin, dass ein Projektor vorgesehen ist, der derart eingereichtet ist, dass mindestens ein Teil der Darstellung auf das Schaufenster projizierbar ist. Hierbei ist es von Vorteil, dass das Schaufenster zumindest teilweise eine halbtransparente oder eine beschichtete Fläche aufweist. So ist es möglich, die von dem Projektor in das Schaufenster projizierte Darstellung für den Kunden gut ablesbar auszuführen.

Eine andere Weiterbildung besteht darin, dass die Aufnahmeeinheit mindestens eine Kamera ist.

Eine Weiterbildung besteht darin, dass die Aufnahmeeinheit eine Kamera ist und dass ein Mittel zur Stahlenteilung vorgesehen ist, das derart eingerichtet ist, dass die Kamera zwei unterschiedliche Strahlengänge aufnimmt. So ist es möglich mit nur einer Kamera anhand der beiden unterschiedlichen Strahlengänge die Position des Zeigeobjekts (zum Beispiel mittels eines Triangulationsverfahrens) zu bestimmen. Zur Aufteilung des Strahlengangs kann beispielsweise ein qualitativ hochwertiger Spiegel vorgesehen sein. Die Rechnereinheit erhält somit von der einen Kamera nur eine Aufnahme, die aber zwei unterschiedliche Strahlengänge, das heißt für die Bestimmung der Position des Zeigeobjekts im Raum vor dem Schaufenster zwei unterschiedliche Bildsequenzen über die Zeit enthält. Anhand dieser aus unterschiedlichen Perspektiven stammenden Bildsequenzen ist es möglich, die Position des Zeigeobjekts vor der auf dem Schaufenster sichtbaren Darstellung zu bestimmen. Diese Position wird eingesetzt, um festzustellen, ob der Benutzer das Zeigeobjekt über eine Fläche bewegt, die mit einer vorgegebenen Aktion verknüpft ist bzw. ob er diese vorgegebene Aktion auslöst (zu den Auslösemechanismen siehe oben bzw. unten).

Eine andere Ausgestaltung ist es, dass zwei Kameras vorgesehen sind, die jeweils den Raum vor der auf dem Schaufenster sichtbaren Darstellung aufnehmen. Dabei sind die Kameras vorteilhaft derart eingerichtet, dass aus unterschiedlichen Perspektiven das Zeigeobjekt vor der auf dem Schaufenster sichtbaren Darstellung aufgenommen wird. Durch die unterschiedlichen Perspektiven ist es möglich, wie oben beschrieben, die Position des Zeigeobjekts vor der auf dem Schaufenster sichtbaren Darstellung zu bestimmen. Dies ist entscheidend für die Auslösung von Aktionen anhand des Zeigeobjekts.

Eine bevorzugte Ausgestaltung besteht darin, dass die mindestens eine Kamera und insbesondere jede Kamera hinter dem Schaufenster ausgeführt ist. Dadurch ist sichergestellt, dass die Kamera dem physikalischen Wirkungsbereich des Benutzers und diversen Witterungseinflüssen entzogen ist. In diesem Fall kann für jede Kamera hinter dem Schaufenster eine optische Umlenkeinheit vorgesehen sein, die derart aufgeführt ist, dass sie den Strahlengang der zugehörigen Kamera in den Raum vor der auf das Schaufenster sichtbaren Darstellung richtet. Nimmt der Benutzer die Interaktion wahr, so führt er das Zeigeobjekt in diesen Raum, die mindestens einen Kamera macht damit eine Aufnahme (aus unterschiedlichen Perspektiven) von dem Zeigeobjekt.

Hierbei sei angemerkt, dass eine oder mehrere (optische) Umlenkeinheiten vorgesehen sein können. Entscheidend ist insbesondere, dass der Strahlengang für jede Kamera bzw. jeder Teilstrahlengang jeder Kamera auf den Raum vor der in dem Schaufenster sichtbaren Darstellung ausgerichtet ist und damit das zur Interaktion eingesetzte Zeigeobjekt aufgenommen werden kann.

Eine andere Weiterbildung besteht darin, dass die mindestens eine Umlenkeinheit ein Prisma oder mindestens einen Spiegel enthält.

Auch ist es eine Ausgestaltung, dass die mindestens eine Umlenkeinheit vor dem Schaufenster ausgeführt ist.

Eine andere Ausgestaltung ist es, dass die mindestens eine Kamera unterhalb der Darstellung angeordnet ist. In diesem Fall ist es von Vorteil, dass oberhalb der Darstellung eine reflektierende Fläche ausgeführt ist. Dadurch kann das Zeigeobjekt kontraststark vor dem Hintergrund erkannt werden. Dies führt auch bei widrigen Lichtverhältnissen zu guten Ergebnissen und damit zu einer hohen Akzeptanz des Benutzers bei der Interaktion mit dem Schaufenster.
Ist die reflektierende Fläche oberhalb der Darstellung ausgeführt, so hat dies den zusätzlichen Vorteil, dass die reflektierende Fläche kaum verschmutzt und insbesondere Witterungseinflüssen durch eine zusätzliche Überdachung des Bereichs vor dem Schaufenster leicht entzogen werden kann. Damit ist eine qualitativ hochwertige Reflexion gewährleistet.

Eine andere Ausgestaltung besteht darin, dass die mindestens eine Kamera oberhalb der Darstellung ausgeführt ist. In diesem Fall kann unterhalb der Darstellung eine reflektierende Fläche vorgesehen sein, die derart eingerichtet ist, dass der Strahlengang von der Kamera zu der Kamera reflektiert wird.

Alternativ können Kamera und ggf. Umlenkeinheit und optional die reflektierende Fläche auch seitlich zu der Darstellung, insbesondere um beliebige Winkel zum Schaufenster, angeordnet sein. Die dargestellten Ausführungen oberhalb und unterhalb der Darstellung sind lediglich zwei von vielen Möglichkeiten.

Um die Qualität bei der Erkennung des Zeigeobjekts zusätzlich zu erhöhen, kann eine Beleuchtungseinheit vorgesehen sein, die den Raum vor der auf dem Schaufenster sichtbaren Darstellung mit Wellen im nichtsichtbaren Spektralbereich beleuchtet. Dabei kann die Beleuchtungseinheit insbesondere gepulst betrieben werden. Vorzugsweise umfasst die Beleuchtungseinheit mindestens eine Infrarot-Lichtquelle, insbesondere mindestens eine Infrarot-Leuchtdiode.

Anhand der Rechnereinheit werden die von der mindestens einen Kamera gelieferten Bildsequenzen aus unterschiedlichen Perspektiven ausgewertet und so die Position des Zeigeobjekts vor der in dem Schaufenster sichtbaren Darstellung bestimmt. Abhängig von der Position des Zeigeobjekts wird eine vorgegebene Aktion ausgelöst, wobei die vorgegebene Aktion insbesondere dann ausgelöst wird, wenn das Zeigeobjekt für eine vorgegebene Zeitdauer auf einer dargestellten Fläche innerhalb der Darstellung verweilt. Dabei hat die dargestellte Fläche eine bestimmte Funktionalität, die bei einer solchen Auslösung von der Rechnereinheit ausgeführt wird. Alternativ kann die vorgegebene Aktion bei Annäherung des Zeigeobjekts an das Schaufenster ab einer vorgegebenen Nähe ausgelöst werden.

Eine Weiterbildung besteht darin, dass die Position des Zeigeobjekts mittels eine Triangulationsverfahrens bestimmbar ist.

Auch ist es eine Ausgestaltung, dass das Zeigeobjekt eine Hand oder ein Finger eines Benutzers ist.

Eine andere Weiterbildung besteht darin, dass eine Bewegung des Zeigeobjekts anhand der mindestens einen Kamera und anhand der Rechnereinheit zu einer Bewegung eines analogen Zeigegeräts (vergleichbar mit einem Mauszeiger) umgesetzt wird.

Auch wird zur Lösung der Aufgabe ein Verfahren zur Interaktion mit einer in einem Schaufenster sichtbaren Darstellung angegeben, bei dem ein Zeigeobjekt in der Nähe des Schaufensters aufgenommen wird. Es wird eine Position des Zeigeobjekts innerhalb der Darstellung bestimmt und eine vorgegebene Aktion durch das Zeigeobjekt durch Zeigen auf eine vorgegebene Fläche ausgelöst.

Das Verfahren ist insbesondere geeignet zur Durchführung anhand der erfindungsgemäßen Anordnung oder einer seiner vorstehend erläuterten Weiterbildungen.

Ausführungsbeispiele der Erfindung werden nachfolgend anhand der Zeichnung dargestellt und erläutert.

Es zeigen
- Fig. 1: eine Skizze mit einer Anordnung zur Interaktion mit einem Schaufenster;
- Fig.2: ein erstes Szenario (in Seitenansicht) zur Interaktion eines Benutzers mit einem Schaufenster;
- Fig.3: ein zweites Szenario (in Seitenansicht) zur Interaktion eines Benutzers mit einem Schaufenster;
- Fig.4: eine Kamera mit einem Mittel zur Strahlenteilung, anhand dessen die Kamera zwei unterschiedliche Strahlengänge aufzeichnet;
- Fig.5: eine Rechnereinheit.
- Fig.6: eine Skizze mit Schritten eines Verfahrens zur Interaktion eines Benutzers mit einem Schaufenster.

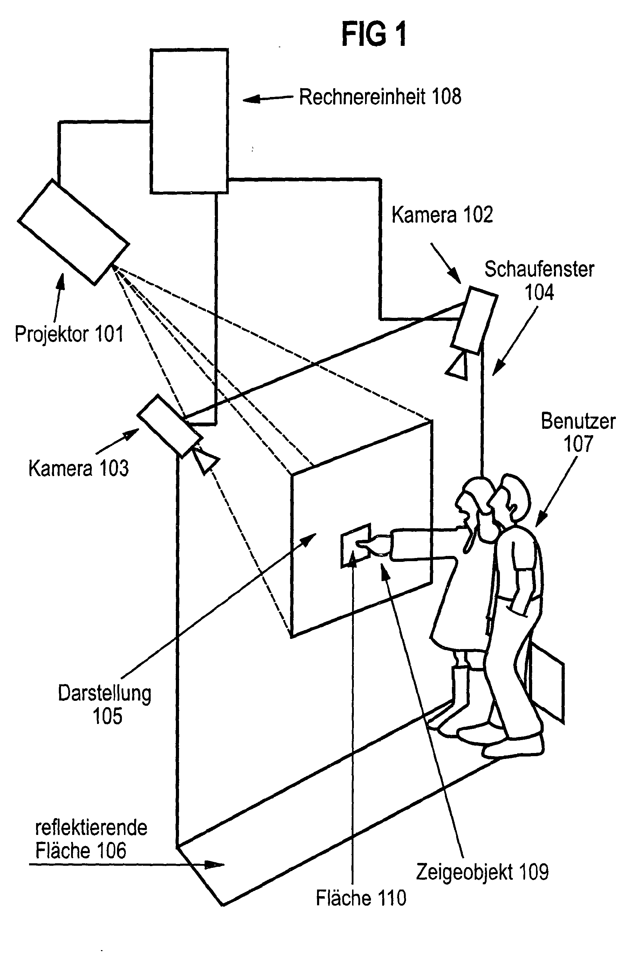

**Fig.1** zeigt eine Skizze mit einer Anordnung zur Interaktion eines Benutzers 107 mit einem Schaufenster 104. Als ein Zeigeobjekt 109 dient die Hand bzw. der Finger des Benutzers 107. In das Schaufenster 104 wird mittels eines Projektors 101 eine Darstellung 105 projiziert. Die Darstellung 105 bietet dem Benutzer 107 mindestens eine Fläche 110, die als ein virtueller Schalter ausgeführt ist und bei deren "Betätigung" eine vorgegebene Aktion auf einer Rechnereinheit 108 ausgelöst wird. Dieses "Betätigen" gestaltet sich insbesondere derart, dass der Benutzer 107 mit dem Zeigeobjekt 109 für eine vorgegebene Zeitdauer vor der Fläche 110 verweilt. Alternativ kann die "Betätigung" auch dadurch erfolgen, dass der Benutzer 107 sein Zeigeobjekt 109 näher als einen vorgegebenen Schwellwert an das Schaufenster 104 vor der Fläche 110 heranführt. Die Ermittlung der Position des Zeigeobjekts 109 vor der Darstellung 105 bzw. der Fläche 110 wird durch die beiden Kameras 102 und 103 in Verbindung mit der Rechnereinheit 108 bestimmt. Die beiden Kameras 102 und 103 liefern aus zwei unterschiedlichen Perspektiven Aufnahmen von dem Zeigeobjekt 109, also insbesondere von dem Raum vor der Darstellung 105. Bevorzugt wird der Strahlengang der beiden Kameras 102 und 103 mit Infrarot-Licht beleuchtet, welches von einer reflektierenden Fläche 106 zu der Kamera reflektiert wird. Bewegt sich in diesem Strahlengang ein Zeigeobjekt 109, so kann dies kontraststark vor dem Hintergrund erkannt werden. Die Rechnereinheit 108 stellt sicher, dass aus den Aufnahmen der beiden Kameras 102 und 103 die Position des Zeigeobjekts 109 vor der Darstellung 105 bestimmt wird. Dazu wird insbesondere ein Verfahren zur Triangulation eingesetzt, allgemein wird aus den beiden von den Kameras 102 und 103 gelieferten zweidimensionalen Darstellungen durch den Unterschied in der Perspektive der beiden Darstellungen auf die dreidimensionale Position des Zeigeobjekts 109 vor der Darstellung 105 rückgeschlossen. Weiterhin wird auch der Projektor 101 von der Rechnereinheit 108 angesteuert. Die Kombination von Rechnereinheit 108, Projektor 101, Darstellung 105, Kameras 102 und 103 und Zeigeobjekt 109 stellt damit eine Anordnung zur Interaktion dar, wobei die Rechnereinheit mit 108 mit Hilfe des Projektors 101 eine dynamische Darstellung 105 bewirkt und die Interaktion des Benutzers 107 über sein Zeigeobjekt 109 mittels der Kameras 102 und 103 eingefangen wird und vorgegebene Aktionen im Hinblick auf die Bewegung des Zeigeobjekts 109 vor der Darstellung 105 ausgelöst werden.

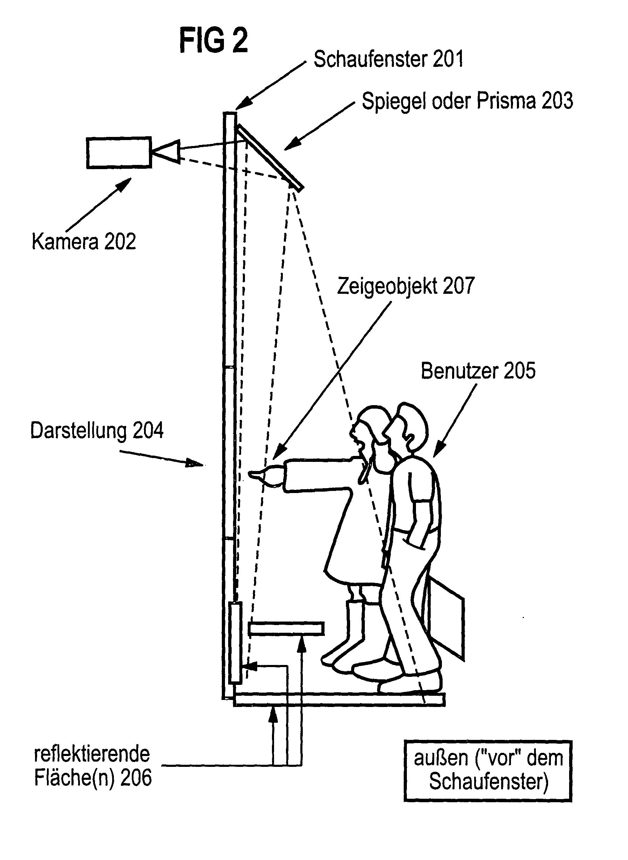

**Fig.2** zeigt ein erstes Szenario in Seitenansicht zur Interaktion eines Benutzers 205 mit einem Schaufenster 201. Es ist eine Kamera 202 hinter dem Schaufenster 201 dargestellt, wobei der Strahlengang der Kamera 202 mittels eines Spiegels oder eines Prismas 203 auf den Bereich vor das Schaufenster umgelenkt wird. Der Benutzer 205 interagiert mit seinem Finger als Zeigeobjekt 207 auf einer Darstellung 204. Die Darstellung 204 ist beispielsweise, wie in Fig.1 gezeigt, mittels eines Projektors in das Schaufenster 201 eingespielt. Alternativ kann die Darstellung 204 auch ein Flachbildschirm in oder hinter dem Schaufenster 201 sein. Zur besseren Erkennung des Zeigeobjekts 207 wird, vorzugsweise mit der Kamera, Infrarot-Licht imitiert. Zusätzlich werden reflektierende Flächen 206 vorgesehen unterhalb der Darstellung 204, so dass das Zeigeobjekt 207 in den Strahlengang zwischen Kamera 202, Spiegel oder Prisma 203 und reflektierenden Flächen 206 erfasst ist. Dadurch hebt sich das Zeigeobjekt des Benutzers 205 stark von dem Hintergrund ab, eine Erkennung ist somit, wie oben in Fig.1 dargestellt, verbessert.

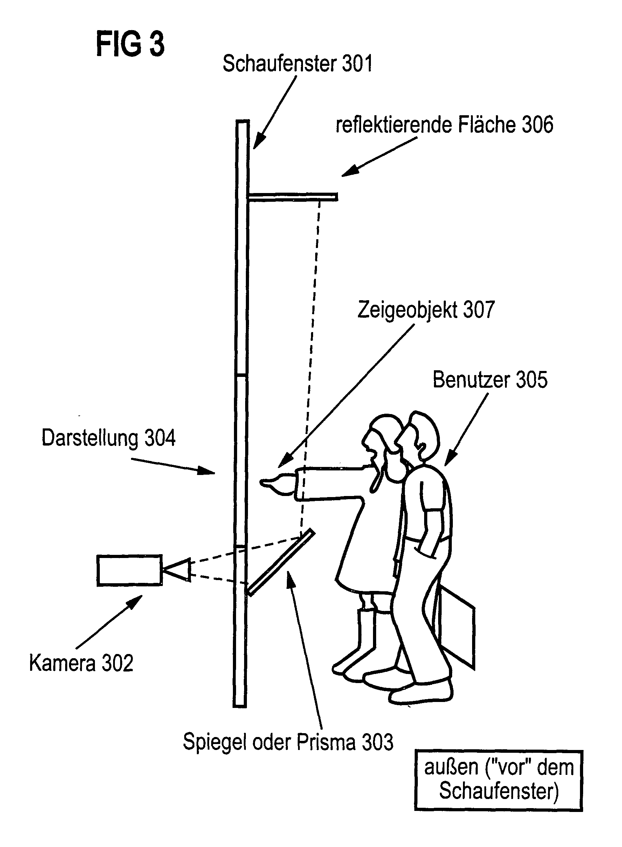

**Fig.3** zeigt ein zweites Szenario in Seitenansicht zur Interaktion eines Benutzers 305 mit einem Schaufenster 301. Fig.3 ist analog zu Fig.2 ausgeführt mit dem Unterschied, dass eine Kamera 302 zusammen mit einem Spiegel oder Prisma 303 unterhalb einer Darstellung 304 ausgeführt ist und eine reflektierende Fläche 306 oberhalb der Darstellung 304 vorgesehen ist. Ein vorteilhafter Effekt besteht wiederum darin, dass ein Zeigeobjekt 307 des Benutzers 305 kontraststark erkannt wird, wobei durch diese Anordnung von Kamera 302, Spiegel oder Prisma 303 und reflektierender Fläche 306 zum einen sichergestellt ist, dass die reflektierende Fläche vor Witterungseinflüssen und Verschmutzung geschützt ist und zum anderen die Umlenkeinheit Spiegel oder Prisma 303 klein und unauffällig ausgeführt werden kann, so dass sich in der Bedienung keinerlei Einschränkungen für den Benutzer 305 ergeben.

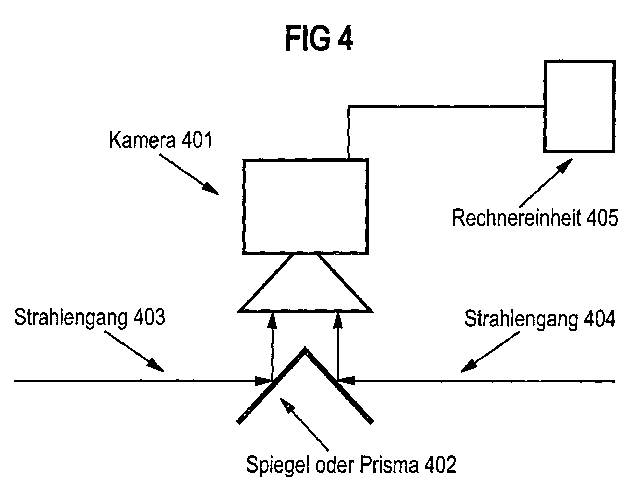

**Fig.4** zeigt eine Kamera 401 mit einem Mittel zur Strahlenteilung 402, das vorzugsweise als Spiegel oder Prisma ausgeführt ist, anhand dessen ein Strahlengang der Kamera 401 in zwei unterschiedliche Strahlengänge 403 und 404 aufgeteilt wird. Ferner ist eine Rechnereinheit 405 gezeigt, die die Kamera 401 ansteuert bzw. Bilder der Kamera 401 auswertet. Bei dieser Auswertung empfängt die Rechnereinheit 405 zweierlei Bildsequenzen, die aus unterschiedlichen Perspektiven, entsprechend Strahlengang 403 und Strahlengang 404, stammen. Die Rechnereinheit 405 setzt somit aus diesen Sequenzen zweier zweidimensionaler Darstellungen eine dreidimensionale Information zusammen, so dass die Position des Zeigeobjekts vor der Darstellung auf dem Schaufenster ermittelt werden kann.

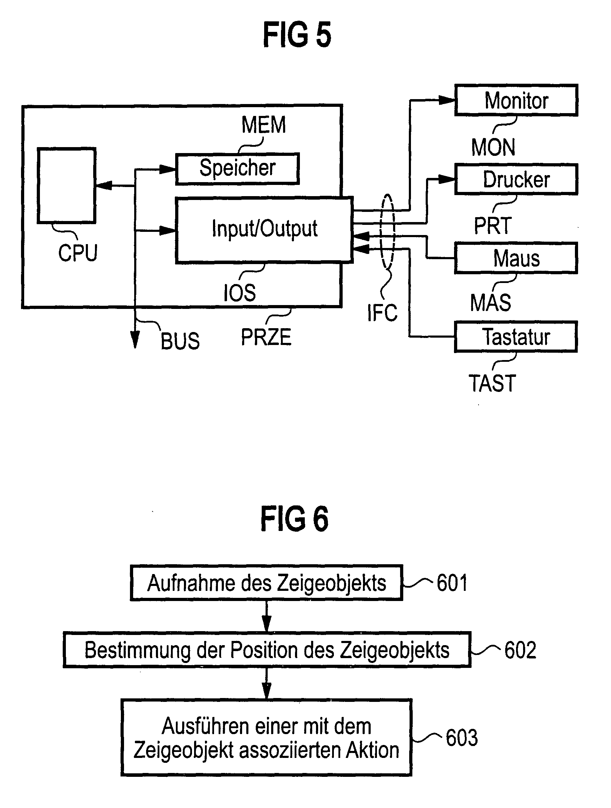

In **Fig.5** ist eine Rechnereinheit PRZE dargestellt. Die Rechnereinheit PRZE umfasst einen Prozessor CPU, einen Speicher MEM und eine Input/Output-Schnittstelle IOS, die über ein Interface IFC auf unterschiedliche Art und Weise genutzt wird: Über eine Grafikschnittstelle wird eine Ausgabe auf einem Monitor MON sichtbar und/oder auf einem Drucker PRT ausgegeben. Eine Eingabe erfolgt über eine Maus MAS oder eine Tastatur TAST. Auch verfügt die Rechnereinheit PRZE über einen Datenbus BUS, der die Verbindung von einem Speicher MEM, dem Prozessor CPU und der Input/Output-Schnittstelle IOS gewährleistet. Weiterhin sind an den Datenbus BUS zusätzliche Komponenten anschließbar, z.B. zusätzlicher Speicher, Datenspeicher (Festplatte) oder Scanner.

**Fig.6** zeigt eine Skizze mit Schritten eines Verfahrens zur Interaktion eines Benutzers mit einem Schaufenster. In einem Schritt 601 wird das Zeigeobjekt des Benutzers aufgenommen und in einem Schritt 602 wird die Position des Zeigeobjekts vor dem Schaufenster, zum Beispiel mittels Triangulation, bestimmt. Anhand der Position des Zeigeobjekts kann, abhängig von dem Inhalt der Darstellung auf dem Schaufenster, mit dem Zeigeobjekt eine vorgegebene Aktion ausgelöst werden. Dieses Auslösen kann beispielsweise, wie oben beschrieben, durch Verweilen für eine vorgegebene Zeitdauer auf einer vorgegebenen Fläche ("virtueller Schalter") oder durch Annäherung des Zeigeobjekts an das Schaufenster erfolgen (siehe Schritt 603).

### Literaturverzeichnis:

- [1]: Projektion mit Gestenbedienung und Auswertung im sichtbaren Bereich, US 5,528,263
- [2]: DE 197 08 240 C1

## Patentansprüche

1. Anordnung zur Interaktion mit einer in einem Schaufenster sichtbaren Darstellung,
a) bei der eine Aufnahmeeinheit vorgesehen ist, die ein Zeigeobjekt in der Nähe des Schaufensters aufnimmt;
b) bei der eine Rechnereinheit vorgesehen ist, anhand derer eine Position des Zeigeobjekts innerhalb der Darstellung bestimmt wird.

2. Anordnung nach Anspruch 1,
bei der zumindest ein Teil der Darstellung auf dem Schaufenster statisch befestigt, insbesondere aufgedruckt, ist.

3. Anordnung nach einem der vorhergehenden Ansprüche,
bei der ein Bildschirm, insbesondere ein Flachbildschirms, vorgesehen ist, der mindestens einen Teil der Darstellung erzeugt.

4. Anordnung nach einem der vorhergehenden Ansprüche,
bei der ein Projektor vorgesehen ist, der derart eingerichtet ist, dass mindestens ein Teil der Darstellung auf das Schaufenster projizierbar ist.

5. Anordnung nach einem der vorhergehenden Ansprüche,
bei der das Schaufenster zumindest teilweise eine halbtransparente oder beschichtete Fläche ist.

6. Anordnung nach einem der vorhergehenden Ansprüche,
bei der die Aufnahmeeinheit mindestens eine Kamera ist.

7. Anordnung nach Anspruch 6,
a) bei der die Aufnahmeeinheit eine Kamera ist;
b) bei der ein Mittel zur Strahlenteilung vorgesehen ist, das derart eingerichtet ist, dass die Kamera zwei Strahlengänge aufnimmt.

8. Anordnung nach Anspruch 6,
bei der zwei Kameras vorgesehen sind, die jeweils den Raum vor der auf dem Schaufenster sichtbaren Darstellung aufnehmen.

9. Anordnung nach einem der Ansprüche 6 bis 8,
bei der die mindestens eine Kamera hinter dem Schaufenster ausgeführt ist.

10. Anordnung nach Anspruch 9,
bei der mindestens eine Umlenkeinheit vorgesehen ist, die derart eingerichtet ist, dass der mindestens eine Strahlengang der mindestens einen Kamera auf den Raum vor die auf dem Schaufenster sichtbaren Darstellung gerichtet ist.

11. Anordnung nach Anspruch 10,
bei der die mindestens eine Umlenkeinheit ein Prisma oder mindestens einen Spiegel enthält.

12. Anordnung nach Anspruch 10 oder 11,
bei der die mindestens eine Umlenkeinheit vor dem Schaufenster ausgeführt ist.

13. Anordnung nach einem der Ansprüche 6 bis 12,
bei der die mindestens eine Kamera unterhalb der Darstellung ausgeführt ist.

14. Anordnung nach Anspruch 13,
bei der oberhalb der Darstellung eine reflektierende Fläche ausgeführt ist.

15. Anordnung nach einem der Ansprüche 6 bis 12,
bei der die mindestens eine Kamera oberhalb der Darstellung ausgeführt ist.

16. Anordnung nach Anspruch 15,
bei der unterhalb der Darstellung eine reflektierende Fläche vorgesehen ist, die derart eingerichtet ist, dass der Strahlengang von der Kamera zu der Kamera reflektiert wird.

17. Anordnung nach einem der vorhergehenden Ansprüche,
bei der eine Beleuchtungseinheit vorgesehen ist, die den Raum vor der auf dem Schaufenster sichtbaren Darstellung mit Wellen im nichtsichtbaren Spektralbereich beleuchtet.

18. Anordnung nach Anspruch 17,
bei der die Beleuchtungseinheit gepulst betrieben wird.

19. Anordnung nach Anspruch 17 oder 18,
bei der die Beleuchtungseinheit mindestens eine Infrarotlichtquelle umfasst.

20. Anordnung nach Anspruch 19,
bei der die Infrarotlichtquelle eine Infrarot-Leuchtdiode ist.

21. Anordnung nach einem der vorhergehenden Ansprüche,
bei der mittels der mindestens einen Kamera und der Rechnereinheit die Position des Zeigeobjekts bestimmbar ist.

22. Anordnung nach Anspruch 21,
bei der mittels der Rechnereinheit abhängig von der Position des Zeigeobjekts eine vorgegebene Aktion ausgelöst wird.

23. Anordnung nach Anspruch 22,
bei der die vorgegebene Aktion ausgelöst wird, indem das Zeigeobjekt für eine vorgegebene Zeitdauer auf einer dargestellten Fläche innerhalb der Darstellung verweilt.

24. Anordnung nach Anspruch 22,
bei der die vorgegebene Aktion durch Annäherung des Zeigeobjekts an das Schaufenster bis zu einer vorgegebenen Nähe ausgelöst wird.

25. Anordnung nach einem der Ansprüche 21 bis 24,
bei der die Position des Zeigeobjekts mittels eines Triangulationsverfahrens bestimmbar ist.

26. Anordnung nach einem der vorhergehenden Ansprüche,
bei der das Zeigeobjekt eine Hand oder ein Finger eines Benutzers ist.

27. Anordnung nach einem der vorhergehenden Ansprüche,
bei der eine Bewegung des Zeigeobjekts anhand der mindestens einen Kamera und anhand der Rechnereinheit zu einer Bewegung eines analogen Zeigegeräts (Mauszeiger) umgesetzt wird.

28. Verfahren zur Interaktion mit einer in einem Schaufenster sichtbaren Darstellung,
a) bei dem ein Zeigeobjekt in der Nähe des Schaufensters aufgenommen wird;
b) bei der eine Position des Zeigeobjekts innerhalb der Darstellung bestimmt wird;
c) bei der durch das Zeigeobjekt durch Zeigen auf eine vorgegebene Fläche innerhalb der Darstellung eine vorgegebene Aktion ausgelöst wird.
